# EUROPEAN PATENT APPLICATION

(11) **EP 1 102 508 A2**
(43) Date of publication of application: **23.05.2001**
(21) Application number: 00310054.2
(22) Date of filing: 13.11.2000
(51) Int. Cl.: H04Q 7/38

(54) **Method and system for transmitting and receiving caller ID data in a wireless telephone system**

(30) Priority: 19.11.1999 US 443997
(71) Applicant: Siemens Information and Communication Mobile LLC, Austin, Texas 78728-3811 (US)
(72) Inventor: Umstetter, James S., Round Rock, Texas 78664 (US); Jreij, Elie, Pflugerville, Texas 78660 (US); Guan, Sheng, Austin, Texas 78728 (US)
(74) Representative: Wilding, Frances Ward

(57) **Abstract**

A method for transmitting and receiving caller ID data (28) in a cordless telephone system is provided that comprises establishing a cordless telephone system having a base station (12) and a mobile unit (14). The method then provides for receiving caller ID data (28) at a base station (12) followed by terminating any current caller ID data (28) transmissions from the base unit (12) to the mobile unit (14). The method next provides for appending start (92) and end message codes (94) to the caller ID data (28) to generate a caller ID message followed by packetizing the caller ID message. The method next provides for transmitting the caller ID packets (72) from the base station (12) to the mobile unit (14). The method next provides for terminating the caller ID packet (72) transmission when the end message code (94) is transmitted. The method next provides for receiving the caller ID packets (72) at the mobile unit (14). The method next provides for assembling the caller ID packets (72) in response to receiving the start message code (92) until the end message code (94) is received. The method next provides for displaying the caller ID data (28) at the mobile unit (14).

## Description

This invention relates generally to the field of telecommunications and, more specifically, to a method and system for transmitting and receiving caller ID data in a wireless telephone system.

As society has grown more complex and operating at a faster pace, a growing need for rapid and continuous communication has taken place. Wireless communication is one form of telecommunication that has experienced rapid growth. Within wireless communication, a particularly important area is the use of portable or mobile telephone handsets connected to the plain, ordinary telephone system at a customer's premises. These systems typically have a base station that connects to the wireline POTS and at least one mobile handset that communicates with the base station permitting the user to move about his or her location. While users desire the freedom and flexibility afforded by mobile communications, they typically do not want to loose or give up the numerous features that they have grown accustomed to that are available through the wireline service. In addition, users desire a voice quality that is as good as voice quality over a wireline link.

Typically the processing requirements for maintaining high quality communication links between a mobile unit and a base station have been substantial. The processing power required for maintaining such communications and providing features desired by users becomes a substantial drain on battery power, therefore shortening the effective use of the mobile unit. These technical requirements for greater power, greater processing capability, together with substantial memory, have resulted in large units that are bulky, heavy and to some extent unsatisfactory to users.

While portable communication devices and methods have provided an improvement over prior approaches in terms of packaging size, the challenges in the field of telecommunications have continued to increase with demands for more inventive techniques having greater flexibility and adaptability.

In wireless telecommunication systems, such as cordless telephone systems, caller ID data received at a base station is generally retransmitted over a radio frequency air-media interface to a mobile unit where the caller ID data is displayed. Since payload-data, such as voice data, takes precedence in these systems, a substantial majority of the available bandwidth is allocated as a payload or voice channel. This leaves limited bandwidth available for transmission of application control data such as caller ID data across a control channel. When two calls arrive in quick succession, the available bandwidth may be overrun thereby corrupting the caller ID data. One solution to this problem is to provide multiple caller ID buffers to store caller ID data until bandwidth is available to deliver the caller ID data to the mobile unit.
However, this solution may be prohibitably expensive in some applications. For example, in lower cost cordless telephone systems, a single caller ID data storage area may be provided in order to minimize memory.
Therefore, a need has arisen for a new method and system for transmitting and receiving caller ID data in a wireless telephone system.

The invention is defined in the independent claims, to which reference should now be made. Further advantageous features are detailed in the dependent claims.

In accordance with embodiments of the present invention, a method and system for transmitting and receiving caller ID data in a wireless telephone system is provided that substantially eliminates or reduces disadvantages and problems associated with previously developed systems and methods.

According to one embodiment, a method for transmitting and receiving caller ID data in a cordless telephone system is disclosed. The method comprises ten steps. Step one calls for establishing a cordless telephone system having a base station and a mobile unit. Step two provides for receiving caller ID data at a base station. Step three calls for terminating any current caller ID data transmissions from the base station to the mobile unit. Step four provides for appending start and end message codes to the caller ID data to generate a caller ID message. In step five, the method provides for packetizing the caller ID message. The next step provides for transmitting the caller ID package from the base station to the mobile unit. Step seven provides for terminating the caller ID packet transmission when the end message code is transmitted. In step eight, the method provides for receiving the caller ID packets at the mobile unit. Step nine calls for assembling the caller ID packets in response to receiving the start message code until the end message code is received. The final step calls for displaying the caller ID data at the mobile unit.

A technical advantage of embodiments of the present invention is that caller ID data that overruns the available bandwidth does not result in transmission of corrupted caller ID data from a base station to a mobile unit. Another technical advantage is that the integrity of caller ID data displayed on the mobile unit is insured since only valid caller ID data transmitted to completion is presented for display at the mobile unit.

For a more complete understanding of the present invention, the objects and advantages thereof, reference is now made to the following description of an embodiment thereof taken in connection with the accompanying drawings in which:
FIGURE 1 is a block diagram illustrating a telecommunication system including a base unit and a mobile unit constructed in accordance with the teachings of the present invention;
FIGURE 2A illustrates in greater detail, a microprocessor used in the base unit of FIGURE 1;
FIGURE 2B illustrates in greater detail, a microprocessor used in the mobile unit of FIGURE 1;
FIGURE 3A illustrates a caller ID buffer in accordance with one embodiment of the present invention;
FIGURE 3B illustrates a display buffer in accordance with one embodiment of the present invention;
FIGURE 4 is a flowchart illustrating a method for receiving caller ID data and preparing that data for transmission in accordance with one embodiment of the present invention;
FIGURE 5 is a flowchart illustrating a method for transmitting the caller ID data in accordance with one embodiment of the present invention;
FIGURE 6 is a flowchart illustrating a method for receiving and processing the caller ID data transmitted in the method of FIGURE 5;
FIGURE 7 is a timeline illustrating the occurrence and overlap of events involved with attempting to deliver caller ID data to an unreachable mobile unit; and
FIGURE 8 is a timeline illustrating the occurrence and overlap of events involved with attempting to deliver caller ID data to a mobile unit.

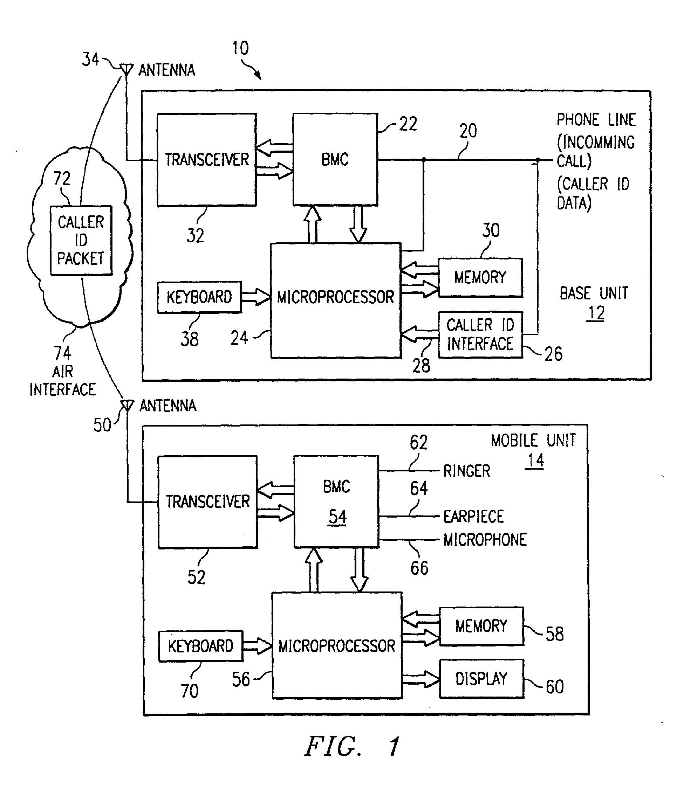

The preferred embodiment of the present invention and its advantages are best understood by referring to FIGURES 1 through 8 of the drawings, like numerals being used for like and corresponding parts of the various drawings.

FIGURE 1 is a block diagram illustrating a telecommunication system 10 including a base unit 12 and a mobile unit 14. The base unit 12 and the mobile unit 14 communicate with each other at a frequency in the industrial/scientific/medical (ISM) band. For example, the units 12 and 14 may communicate in the range of 2400 to 2483.5 MHz. It will be understood, however, that the base unit 12 and the mobile unit 14 may communicate with each other at other suitable frequencies without departing from the scope of the present invention.

The telecommunication system 10 illustrated in FIGURE 1 is a cordless telephone system. In this exemplary embodiment, the mobile unit 14 comprises a mobile handset that communicates with the base unit 12 over discreet radio frequency channels. Although the telecommunication system 10 is illustrated as a cordless telephone system, it will be understood that the telecommunication system 10 may comprise any suitable type of wireless communication system. For example, the telecommunication system 10 may comprise a cellular telephone system, Local Multipoint Distribution System, and the like, without departing from the scope of the present invention.

In accordance with the exemplary embodiment shown in FIGURE 1, the base unit 12 comprises a phone line 20 that is coupled to a landline for receiving and transmitting voice or other data. For an incoming telephone call, data from the phone line 20 is passed to a microprocessor 24 and a caller ID interface 26. The caller ID interface 26 extracts caller ID data 28 that may include a name and a telephone number associated with the originator of the telephone call, from the data on the phone line 20 and passes it to the microprocessor 24. The microprocessor 24 communicates with an internal memory 30 while processing the data received from the phone line 20 and the caller ID interface 26.

The microprocessor 24 then communicates to a burst mode controller (BMC) 22 the processed data from the phone line 20 and the caller ID interface 26, along with any additional data that needs to be transmitted to the mobile unit 14. The BMC 22 also receives data directly from the phone line 20 which is processed along with the data from the microprocessor 24. The BMC 22 then communicates the data to a transceiver 32 which transmits a signal through an antenna 34 to the mobile unit 14. The base unit 12 also comprises a keyboard 38 for inputting data to the microprocessor 24. According to one embodiment, the keyboard 38 is a numeric keypad for entering a telephone number or other data.

The mobile unit 14 receives the signal from the base unit 12 through an antenna 50 which passes the signal to a transceiver 52. The transceiver 52 processes the data and passes it to a BMC 54 which communicates with a microprocessor 56. The microprocessor 56 communicates with an internal memory 58 and sends data to a display 60, such as an LCD or LED. For example, the microprocessor 56 may send to the display 60 a name and a telephone number extracted by the caller ID interface 26 in the base unit 12.

The BMC 54 also sends a signal to a ringer 62 to notify a user of an incoming call. After the user responds by activating the mobile unit 14, the BMC 54 sends the voice data received from the base unit 12 to an earpiece 64. After the connection is completed, voice data for transmission to the phone line 20 through the base unit 12 is received by the BMC 54 from the microphone 66. This data is transmitted from the mobile unit 14 to the base unit 12 in a similar manner to the transmission of data from the phone line 20 to the earpiece 64. The mobile unit 14 also comprises a keyboard 70 for a user to enter information for communication to the microprocessor 56. This keyboard 70 may be, for example, a numeric keypad on a mobile telephone handset for entering a telephone number.

The same process is also used for an outgoing telephone call, beginning with the activation of the mobile unit 14, which sends a signal through the BMC 54 to the transceiver 52 and from the transceiver 52 to the antenna 50. From the antenna 50 of the mobile unit 14 the signal is transmitted to the antenna 34 of the base unit 12, which passes the signal to the transceiver 32. The transceiver 32 passes the signal through the BMC 22 to the phone line 20. The called party number data, caller ID information, voice and other data is then communicated back and forth between the mobile unit 14 and the base unit 12 as previously described.

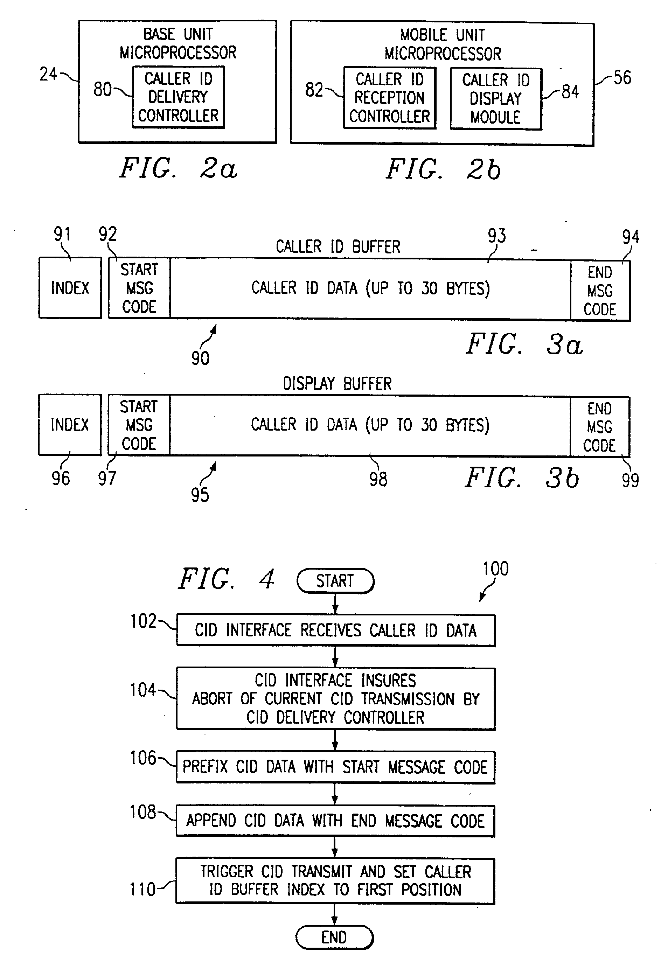

Signals are transmitted between base unit 12 and mobile unit 14 through an air medium generally referred to as an air interface 74. The air interface 74 encompasses the communication of signals between base unit 12 and mobile unit 14 for purposes of control and transmission of telecommunications data. The air interface 74 logically includes an air interface connection that may include a call connection air interface and a caller ID connection air interface. Base unit 12 transmits caller ID data 28 to mobile unit 14 in a series of caller ID packets 72 across the caller ID air interface. The process of transmitting caller ID packet 72 will be discussed in more detail below in connection with FIGURES 2 through 8.

Since base unit 12 communicates with mobile unit 14 through an air interface 74, caller ID data 28 received by base unit 12 should be retransmitted, or delivered, to mobile unit 14 for display. Since the caller ID data 28 must be retransmitted to mobile unit 14, another caller ID data 28 may be received before base unit 12 completely delivers the previous caller ID data 28. In that case, the bandwidth available in the air interface 74 for delivery of application control data, such as caller ID data, is overrun meaning that caller ID data coming in is in excess of telecommunication system's 10 ability to deliver. Therefore, caller ID data being transmitted to mobile unit 14 may be corrupted. In an exemplary embodiment, telecommunications system 10 includes a single storage area for caller ID data in order to reduce unit cost of base station 12 and mobile unit 14. The present invention insures the integrity of. caller ID data 28 delivered to mobile unit 14 by aborting current transmissions of caller ID data 28 that are active when another caller ID data 28 i.s received.

FIGURE 2A illustrates additional details of base unit microprocessor 24. Microprocessor 24 includes a caller ID delivery controller 80. Caller ID delivery controller 80 manages and performs delivery of valid complete caller ID data 28 to mobile unit 14 across the air interface 74. Caller ID delivery controller 80 receives caller ID data 28 from caller ID interface 26 and prepares caller ID data 28 for transmission to mobile unit 14 in a series of caller ID packets 72. Caller ID delivery controller 80 also insures the integrity of caller ID data 28 delivered to mobile unit 14 as described in more detail below in connection with FIGURES 3 through 8.

FIGURE 2B illustrates in greater detail mobile unit microprocessor 56. Microprocessor 56 includes a caller ID reception controller 82 and a caller ID display module 84. Caller ID reception controller 82 controls reception, ordering, assembling, and preparing for display of caller ID packets 72 received from base unit 12. Caller ID reception controller 82 receives caller ID packets 72 transmitted by base unit 12 and stores the caller ID packets 72. Caller ID reception controller 82 orders and assembles caller ID packets 72 until a final caller ID packet 72 is received. After receiving the final caller ID packet 72, the caller ID reception controller 82 presents the ordered and assembled caller ID packets 72 to caller ID display module 84 for display upon display 60. Caller ID display module 84 displays the ordered and assembled caller ID packets 72 after caller ID reception controller 82 receives the final caller ID packet 72.

FIGURE 3A illustrates a caller ID buffer 90. Caller ID buffer 90 may be part of internal memory 30. However, caller ID buffer 90 may reside in any suitable location including caller ID interface 26 or microprocessor 24. Caller ID buffer 90 includes an associated buffer index 91. Buffer index 91 may be used to either indicate a current location within caller ID buffer 90 or for notifying other parts of base unit 12 of extraordinary situations such as the reception of new caller ID data 28 prior to transmitting the final caller ID packet of an existing caller ID data 72. Caller ID buffer 90 includes a start message code 92, caller ID buffer data 93, and end message code 94. Start message code 92, caller ID buffer data 93, and end message code 94 may jointly be referred to as a caller ID message.

In an exemplary embodiment, base unit 12 includes a single caller ID buffer 90. Due to limited bandwidth available for transmission of application control data such as caller ID data 28, base unit 12 may receive caller ID data 28 faster than it can transmit that data in the form of caller ID packet 72 to mobile unit 14. Therefore, base unit 12 should be able to abort transmission of a current set of caller ID packet 72 to allow new caller ID data 28 to be stored in caller ID buffer data 93. The process and function of caller ID buffer 90 will be described in more detail in connection to FIGURES 4 through 6.

FIGURE 3B illustrates a display buffer 95. Display buffer 95 may be part of internal memory 58. However, display buffer 95 may reside in any suitable location including microprocessor 56. Display buffer 95 includes an associated display buffer index 96. Display buffer index 96 may be used to indicate a current location within display buffer 95. Display buffer 95 includes a start message code 97, a caller ID display data 98, and an end message code 99. Although display buffer 95 is illustrated with a start message code 97 and an end message code 99, it will be understood that storage of these codes is optional since the codes are not displayed on display 60. In the current embodiment, mobile unit 14 waits to display caller ID data on display 60 until the final caller ID packet 72 is received. The final caller ID packet 72 is indicated by the presence of end message code 94. The process and function of display buffer 95 will be described in more detail in connection to FIGURES 4 through 6.

FIGURES 4 through 6 are flow diagrams illustrating a method for transmitting and receiving caller ID data between base unit 12 and mobile unit 14.

Referring to FIGURE 4, a method for receiving caller ID data 28 and preparing caller ID data 28 for transmission to mobile unit 14 through a series of caller ID packets 72 is generally indicated at 100. The method commences at step 102 where caller ID interface 26 receives a transmission across phone line 20 and interprets caller ID data from the transmission. Caller ID interface 26 is preferably a commonly available standardized caller ID interpretation and processing chip. In one embodiment, caller ID interface 26 is a caller ID integrated circuit from Rockwell Industries, Inc. Caller ID interface 26 interprets a series of tones on phone line 20 and generates caller ID data 28 that may include a caller name and a caller phone number. Caller ID data 28 is variable in length and may be up to 30 bytes in-length.

The method proceeds to step 104 where caller ID interface 26 ensures abort of a current caller ID data transmission from caller ID buffer 90. In one embodiment, caller ID interface 26 places a non-index value abort code in buffer index 91 to indicate that any transmission of caller ID packet 72 currently in progress should abort immediately. In that embodiment, the non-index value abort code is a hexadecimal "FF". Aborting any transmission of caller ID packet 72 currently in progress insures that caller ID data transmitted to mobile unit 14 will not be corrupted by new caller ID data 28. Since caller ID interface 26 does not store caller ID data 28, it is necessary to provide a storage area, such as caller ID buffer 90, for temporary storage of caller ID data 28 prior to delivery to mobile unit 14. Once any transmission of caller ID packet 72 currently in progress is aborted, caller ID buffer 90 is available for storage of newly collected caller ID data 28. After setting the buffer index 91 to the abort code, caller ID interface 26 forwards new caller ID data 28 to caller ID buffer data 93.

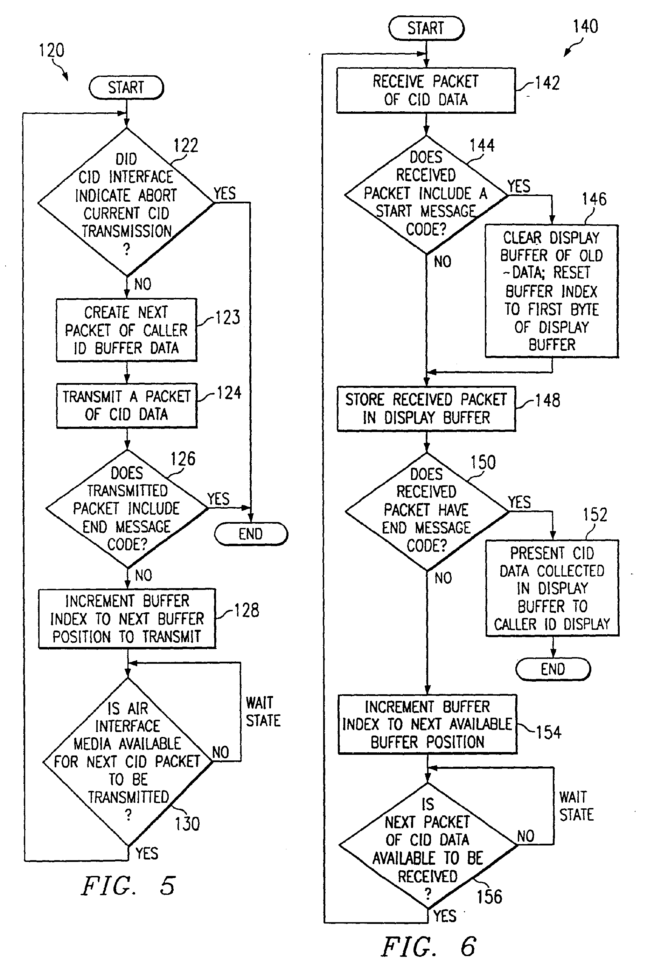

The method proceeds to step 106 where a particular code is inserted in start message code 92 to indicate the start of a new set of caller ID data. In one embodiment, start message code 92 is a non-caller ID data byte code equal to hexadecimal "DE". The start message code 92 indicates to mobile unit 14 that a new caller ID data 28 is being transmitted and that appropriate action should be taken. The details of mobile unit 14 processing with respect to caller ID data will be discussed in detail in connection with FIGURE 6.

The method proceeds to step 108 where a specified code is appended to the end of caller ID buffer data 93 as an end message code 94 to indicate the end of caller ID data being transmitted to mobile unit 14. Caller ID data 28 is variable in length. Therefore, the last byte of valid data should be indicated in some way such as end message code 94. In the exemplary embodiment, the last byte of valid data in caller ID buffer data 93 is indicated by end message code 94 immediately following the last byte of valid data. End message code 94 is used by mobile unit 14 to trigger display of the caller ID data on display 60. In one embodiment, end message code 94 is a non-caller ID data byte code equal to hexadecimal "DF".

The method proceeds to step 110 where caller ID interface 26 informs microprocessor 24 that caller ID buffer 90 is ready for transmission to mobile unit 14. In one embodiment, caller ID interface 26 sets buffer index 91 to the first position in caller ID buffer 90 available for transmission to mobile unit 14. In that embodiment, the first available position is start message code 92. Recall that buffer index 91 contains an abort code such as a hexadecimal "FF" while caller ID buffer 90 is being loaded with caller ID data 28, start message code 92, and end message code 94. At this point, microprocessor 24, including caller ID delivery controller 80, is prepared to transmit caller ID buffer 90 to mobile unit 14. After step 110, the method terminates.

Referring to FIGURE 5, a method for transmitting the contents of caller ID buffer 90 to mobile unit 14 is generally indicated at 120. The method commences at step 122 where a decision is made regarding whether caller ID interface 26 indicated that any current caller ID transmission should be aborted. Recall that in one embodiment, caller ID interface 26 sets buffer index 91 to an abort code to indicate that new caller ID data 28 will overlay caller ID buffer data 93. Since new caller ID data 28 will overlay caller-ID buffer data 93, the integrity of the contents of caller ID buffer 90 being transmitted to mobile unit 14 is compromised. Therefore, the present invention terminates the transmission and loses the caller ID data rather than potentially provide invalid or incomplete caller ID data to mobile unit 14. The situation arises when two calls come in quick succession such as when a customer has caller ID on call waiting. In that case, it is possible for two caller ID data to be received within a short period of time before the first caller ID data can be completely retransmitted to mobile unit 14. If caller ID interface 26 indicates that the current caller ID transmission should be aborted, the YES branch of decisional step 122 terminates the method thereby terminating, or aborting, any transmission currently in progress.

If caller ID interface 26 does not indicate that the current caller ID transmission should be aborted, then NO branch of decisional step 122 proceeds to step 123 where the next packet of data in caller ID buffer 90 is created as a caller ID packet 72 in preparation for transmission to mobile unit 14. In one embodiment, the packet size of caller ID packet 72 is two bytes. However, any packet size suitable to the air interface bandwidth provided may be used. Caller ID buffer 90 is transmitted in several packets since the bandwidth available in the air interface 74 for transmission of application control data, such as caller ID data, is limited and is substantially less than the bandwidth needed to transmit the contents of caller ID buffer 90 at one time.

The method proceeds to step 124 where the next caller ID packet 72, as indicated by buffer index 91, is transmitted to mobile unit 14. The method proceeds to decisional step 126 where a decision is made-regarding whether the most recently transmitted packet of data from caller ID buffer 90 included the end message code 94. If the most recently transmitted packet of data from caller ID buffer 90 included end message code 94, the YES branch of decisional step 126 terminates the method. At this point, all of the valid data in caller ID buffer 90 has been transmitted to mobile unit 14.

If the most recently transmitted packet of data from caller ID buffer 90 does not include end message code 94, the NO branch of decisional step 126 proceeds to step 128 where buffer index 91 is incremented by the size of caller ID packet 72 to indicate the next caller ID buffer 90 position available for transmission to mobile unit 14. By incrementing buffer index 91, the process steps through caller ID buffer 90 transmitting each caller ID packet 72 in succession starting with start message code 92 and terminating with end message code 94.

The method proceeds to decisional step 130 where a decision is made regarding whether an air interface media 74 is available to transmit the next caller ID packet 72. If no air interface media 74 is currently available to transmit the next caller ID packet 72, the NO branch of decisional step 130 proceeds to decisional step 130 thereby entering a wait state until an air interface media 74 is available to transmit the next caller ID packet 72. Since control data such as caller ID data shares limited bandwidth in the air interface media 74, bandwidth may not be available to transmit caller ID packet 72 across the air interface media 74.

If air interface media 74 is available to transmit the next caller ID packet 72, the YES branch of decisional step 130 proceeds to decisional step 122 where the method restarts to transmit the next caller ID packet 72.

Referring to FIGURE 6, a method for receiving and processing caller ID packet 72 from base unit 12 in mobile unit 14 is generally indicated at 140. The method commences at step 142 where a caller ID packet 72 is received by mobile unit 14 in caller ID reception controller 82. Reception of the caller ID packet 72 causes caller ID reception controller 82 to process, order, and assemble caller ID packet 72 into display buffer 95.

The method proceeds to decisional step 144 where a determination is made regarding whether the received caller ID packet 72 includes start message code 92. If received caller ID packet 72 includes start message code 92, the YES branch of decisional step 144 proceeds to step 146 where caller ID reception controller 82 clears the display buffer 95 of old data. Clearing the display buffer 95 insures that partially transmitted and received caller ID data is flushed from the display buffer 95 and will not be displayed and that it will not corrupt new caller ID data currently being received and stored. Caller ID reception controller 82 also resets the display buffer index to the first byte of the display buffer 95. Resetting the display buffer index 96 to the first byte of the display buffer 95 causes caller ID reception controller 82 to load the first caller ID packet 72 in the first position of display buffer 95. After step 146 the method proceeds to step 148.

If the received caller ID packet 72 does not include start message code 92, the NO branch of decisional step 144 proceeds to step 148 where caller ID packet 72 is stored in the display buffer 95 where indicated by the display buffer index 96. Although the present embodiment contemplates storing start message code 92 and end message code 94 in display buffer 95, start message code 92 and end message code 94 do not need to be stored since they are not displayed on display 60. Display logic in caller ID display module 84 compensates for the presence or absence of start message code 97 and end message code 99 in display buffer 95. For example, if the size of caller ID packet 72 is one byte, method step 146 may proceed past method step 148 such that the start message code 92 is not stored in the display buffer 95.

The method proceeds to decisional step 150 where a decision is made regarding whether the received caller ID packet 72 includes end message code 94. If the received caller ID packet 72 includes end message code 94, the YES branch of decisional step 150 proceeds to step 152 where the caller ID data collected in the caller ID display data 98 is presented to the caller ID display module 84 for display on mobile unit display 60. When end message code 94 is received, caller ID reception controller 82 is assured that valid and complete caller ID data has been received and loaded in display buffer 95. After step 152, the method terminates.

If the received caller ID packet 72 does not include the end message code 94, the NO branch of decisional step 150 proceeds to step 154 where the display buffer index 96 is incremented to the next available buffer position in display buffer 95 consistent with the size of caller ID packet 72. By incrementing the display buffer index 96 the method loads the display buffer 95 incrementally with data from the series of caller ID packets 72.

The method proceeds to decisional step 156 where a decision is made regarding whether the next caller ID packet 72 is available to be received. If the next caller ID packet 72 is not available to be received, the NO branch of decisional step 156 proceeds to decisional step 156 thereby entering a wait state until the next caller ID packet 72 is available for reception. If the next caller ID packet 72 is available to be received, the YES branch of decisional step 156 proceeds to step 142 where the method restarts.

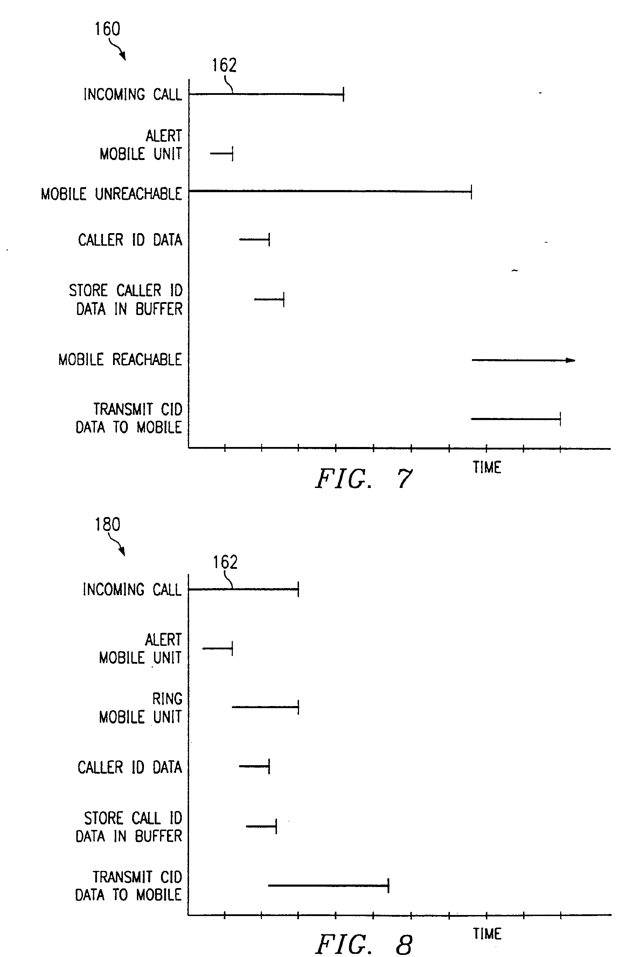

FIGURES 7 and 8 illustrate the situation where caller ID data 28 is available for delivery through caller ID delivery controller 80, but the associated incoming call has terminated either prior to delivery or during delivery. The present invention removes delivery of caller ID data from the context of an associated incoming call thereby allowing caller ID data to be delivered after termination of the associated incoming call.

When base unit 12 attempts to deliver caller ID buffer data 93, mobile unit 14 may be unreachable. Mobile unit 14 may be unreachable due to a power off situation, an out of range situation, or any other circumstance where base unit 12 cannot communicate with mobile unit 14. In that case, the caller ID buffer data 93 awaits delivery to mobile unit 14 until mobile unit 14 becomes reachable. If caller ID buffer data 93 still includes valid undelivered data when mobile unit 14 becomes reachable again, the present invention will deliver the caller ID buffer data 93 to mobile unit 14 regardless of the presence or existence of an associated incoming call.

In another similar situation, caller ID buffer data 93 may be in the process of being delivered via caller ID packet 72 to mobile unit 14 when the associated incoming call terminates. The present invention continues to deliver the caller ID buffer data 93 until either transmission is complete or a new caller ID data 28 causes the transmission to abort. By doing this, the present invention removes delivery of caller ID data to mobile unit 14 outside the context of the incoming call associated with the caller ID data.

Referring to FIGURE 7, a timeline illustrating various events occurring when base unit 12 attempts to deliver caller ID data 28 to an unreachable mobile unit 14 is generally indicated at 160. First, an incoming call 162 begins a sequence of events for attempting to deliver caller ID data 28 to mobile unit 14. Since mobile unit 14 is not linked to base unit 12 by a wire line as in a traditional telephone, caller ID data 28 must be retransmitted to mobile unit 14. After receiving the incoming call 162 base unit 12 attempts to alert mobile unit 14 that an incoming call 162 is available. After some period of time, base unit 12 determines that mobile unit 14 is unreachable. Consistent with current telecommunications protocol, caller ID data is received on phone line 20 by caller ID interface 26 where it is interpreted to generate caller ID data 28 that is eventually stored in caller ID buffer 90. After some period of time, the incoming call 162 terminates due to failure to connect the call with mobile unit 14. In general, incoming call 162 terminates by the calling party physically terminating the call. However, any other method of terminating incoming call 162 is contemplated by the present invention.

After the incoming call 162 terminates and after the passage of some period of time, mobile unit 14 may become reachable again. For example, mobile unit 14 may be powered up or returned to the operational range of telecommunication system 10. Once mobile unit 14 becomes reachable, base unit 12 determines whether the caller ID buffer data 93 is valid and undelivered. If caller ID buffer data 93 is valid and undelivered, base unit 12 goes through the aforementioned process to transmit the caller ID buffer 90 in a series of caller ID packets 72 to mobile unit 14.

Referring to FIGURE 8, a timeline illustrating various events that occur during delivery of caller ID data from base unit 12 to mobile unit 14 when the incoming call 162 associated with the caller ID data 28 terminates prior to complete transmission of the caller ID data 28 to mobile unit 14 is generally indicated at 180. As previously described, the present invention removes delivery of caller ID data 28 to mobile unit 14 outside the context of an incoming call 162.
Therefore, the existence of an incoming call 162 is not a condition precedent to delivery of caller ID data 28.

An incoming call 162 begins a series of events to deliver caller ID data 28 to mobile unit 14. After base unit 12 receives the incoming call 162 on phone line 20, base unit 12 alerts mobile unit 14 by establishing a call connection air interface. After establishing the call connection air interface, base unit 12 rings mobile unit 14. While mobile unit 14 is ringing, caller ID data is transmitted across phone line 20 consistent with existing telecommunications protocols. Caller ID interface 26 interprets the caller ID information on phone line 20 and generates caller ID data 28 that is eventually stored in caller ID buffer 90. After storing caller ID data 28 in caller ID buffer 90, base unit 12 begins transmission of caller ID buffer data 93 to mobile unit 14 in a series of caller ID packets 72 as previously described. While caller ID packets 72 are being transmitted, the incoming call 162 terminates prior to the transmission of a final caller ID packet 72 indicated by the existence of the end message code 94.

The present invention continues delivery of caller ID packets 72 to mobile unit 14 regardless of the existence of an incoming call. Therefore, the previously described process for transmitting and receiving caller ID data continues until either-mobile unit 14 receives the final caller ID packet 72 or a new caller ID data 28 is received. As previously described, a new incoming caller ID data 28 may abort transmission of the current caller ID buffer 90 to mobile unit 14.

While the invention has been particularly shown and described by the foregoing detailed description, it will be understood by those skilled in the art that various other changes in form and detail may be made without departing from the scope of the invention.

## Claims

1. A method which includes:
receiving caller ID data at a base station;
aborting any current caller ID data transmissions from the base station (12) to a mobile unit (14);
appending start and end message codes (92, 94) to the caller ID data (28) to generate a caller ID message;
releasing the caller ID message for transmission to the mobile unit (14);
packetizing the caller ID message; and
transmitting the caller ID message packets (72) to the mobile unit (14) until the end message code (94) is transmitted.

2. A method according to claim 1 which further includes:
establishing a cordless telephone system having a base station and a mobile unit; and
terminating the caller ID packet transmission when the end message code (94) is transmitted;
receiving the caller ID packets (72) at the mobile unit (14);
assembling the caller ID packets (72) in response to receiving the start message code (92) until the end message code (94) is received; and
displaying the caller ID data (28) at the mobile unit (14).

3. A method according to claim 1 or 2, wherein packetizing the caller ID message includes dividing the caller ID message into packets (72) of two bytes.

4. A method according to claim 2, wherein assembling the caller ID packets (72) includes:
placing a first caller ID packet (72) having the start message code (92) in the first position of a display buffer (95); and
ordering subsequent caller ID packets (72) received after the first caller ID packet (72) in the next available positions of the display buffer (95) until a final caller ID packet (72) having the end message code (94) is placed in the display buffer (95).

5. A method which includes:
receiving a first call at a base station;
receiving a first caller ID data associated with the first call at the base station;
transmitting the first caller ID data to the mobile unit; and
receiving a second call and an associated second caller ID data at the base station during transmission of the first caller ID data;
aborting transmission of the first caller ID data (28) in response to receiving the second caller ID data (28); and
transmitting the second caller ID data (28) to the mobile unit (14).

6. A method according to claim 5, further comprising:
receiving a portion of the first caller ID data (28) at the mobile unit (14);
receiving all of the second caller ID data (28) at the mobile unit (14); and
displaying the second caller ID data (28) at the mobile unit (14).

7. A method according to claim 6, further comprising:
discarding the portion of the first caller ID data (28) received at the mobile unit (14).

8. A method which includes:
receiving caller ID data at a mobile unit;
in which the caller ID data includes a plurality of caller ID data packets (72), a first caller ID data packet (72) indicating that new caller ID data (28) is being received, a final caller ID data packet (72) indicating that a complete set of caller ID data packets (72) has been received; and
wherein the method further includes:
clearing a display buffer (95) in the mobile unit (14) when the first caller ID data packet (72) is received;
resetting a buffer index (96) to the first position of the display buffer (95) when the first caller ID data packet (72) is received;
storing the caller ID data packets (72) in the display buffer position specified by the buffer index (96) ;
incrementing the buffer index (96) to the next available display buffer position each time one of the caller ID data packets (72) is stored; and
displaying the caller ID data (28) at the mobile unit (14) when the final caller ID data packet (72) is received.

9. A system which includes:
a base station coupled to a telephone line and operable to receive telecommunications data from the telephone line;
a mobile unit operable to receive telecommunications data transmitted by the base station over an air interface connection; and
a caller ID message having a plurality of characters; wherein
the base station (12) includes a caller ID delivery controller (80), the caller ID delivery controller (80) operable to receive and packetize the caller ID message, the caller ID delivery controller (80) further operable to transmit the caller ID message packets (72) from the base station (12) to the mobile unit (14) in response to receiving a complete caller ID message indicator, the caller ID delivery controller (80) further operable to abort transmission of the caller ID message packets (72) in response to receiving a new caller ID message prior to complete transmission of the caller ID message packets (72), the caller ID delivery controller (80) further operable to indicate a start of packet transmission and an end of packet transmission; and
the mobile unit includes a caller ID reception controller (82), the caller ID reception controller (82) operable to receive and store the caller ID message packets (72), the caller ID reception controller (82) further operable to assemble the caller ID message packets (72) ordering the caller ID message packets (72) into a caller ID display message beginning with the start of packet transmission indicator (92) and ending with the end of packet transmission indicator (94), the caller ID reception controller (82) further operable to present the caller ID display message for display in response to receiving the end of packet transmission indicator (94).

10. A system according to claim 9, further comprising:
a caller ID interface (26) operable to receive caller ID data (28) and to generate the caller ID message, the caller ID interface (26) further operable to send a complete caller ID message indicator to the caller ID delivery controller (80) in response to generating the caller ID message.

11. A system according to claim 9 or 10, further comprising:
a caller ID display module (84) operable to display the caller ID display message in response to presentation of the caller ID display message for display by the caller ID reception controller (82).

12. A system according to claim 9, 10, or 11, wherein the caller ID message packets (72) include one or more bytes of the caller ID message.
